# EUROPEAN PATENT SPECIFICATION

(11) **EP 1 464 536 B1**
(45) Date of publication and mention of the grant of the patent: **10.09.2008**
(21) Application number: 04075790.8
(22) Date of filing: 11.03.2004
(51) Int. Cl.: B60P 1/64

(54) **A device for loading and transporting silos on trucks**
Vorrichtung zum Aufladen und Transportieren von Silos auf Lastkraftwagen
Dispositif pour le chargement et le transport des silos sur des camions

(30) Priority: 04.04.2003 IT MO20030097
(43) Date of publication of application: 06.10.2004
(73) Proprietor: R & S S.r.l., 48100 Ravenna (IT)
(72) Inventor: Emiliani, Giovanni, 48014 Castel Bolognese (Ravenna) (IT); Randon, Paolo, 31050 Vedelago (Treviso) (IT)
(74) Representative: Gotra, Stefano

(56) References cited:
- EP-A- 0 811 525
- DE-A- 4 019 618
- DE-A- 4 430 573
- DE-A- 4 440 538
- DE-U- 20 019 129
- US-A- 3 857 452

## Description

The invention relates in particular but not exclusively to trucks operating with silos destined for containing building materials, where the silo is to be transported to building sites for the contents to be used.

Trucks exist at present which incorporate a fixed horizontal structure to which a mobile structure is hinged; the mobile structure is rotated by hydraulic cylinders so as to be brought into a vertical position. The mobile structure includes hooking systems, such as hooks, forks or the like, which grip the silos at hookable structures thereon and lay the silos on the fixed structure of the truck. To position the silo correctly on the truck, known hooking systems are generally longitudinally slidable along the mobile structure.

Since the various constructors of silos use different types of hooking structures, each of which needs a special hooking system, what often happens is that the trucks for loading the silos, especially those trucks belonging to freelance truckers, are not equipped with the hooking systems needed for the type of silo that has to be loaded. As a result of this the user has to use only those trucks belonging to transporters having the right hooks, or else transporters recommended by the silo manufacturers, all of which leads to practical drawbacks.

Document DE 4019618 discloses a tipper for picking-up and setting down containers vertically. A vehicle for picking up and setting down containers in the upright position has hooks which can engage from below into boxes set round the outer circumference of the containers. The hooks can swivel about axes parallel to the longitudinal direction of the tipper assembly so that they can at least swivel away into a position further back on the tipper assembly until they no longer project over the tipper assembly so that other containers can be taken up on the support face of the tipper assembly. Draw members engage on the hooks to move them in the longitudinal direction of the tipper assembly and can be wound up on the vehicle. At their end opposite the winch end the draw members have detachable engagement parts such as eyelets or hooks so that after release they can engage by that end on other containers in order to pick them up and set them down on the tipper assembly under the control of the winch.

A further problem which frequently crops up, for example when not-completely-empty silos are to be loaded, is how to estimate the overall weight of the silo so that the stability of the truck will not be compromised, or its load rating exceeded. Given the special loading system, where the mobile structure starts in a vertical position and includes a rest base for the fixed structure which is rested on the earth at the moment of loading, normal load assessing systems provide wrong information.

The main aim of the present invention is to obviate the above-mentioned drawbacks by providing a device for a truck which can operate with silos having any type of hookable structure.

An advantage of the invention is that it can be applied to known-type trucks. A further advantage of the invention is that the device can be freed from the truck.

A further advantage of the invention is that the weight of the silo can be correctly assessed during a loading thereof.

These aims and advantages and more besides are all attained by the present invention, as it is characterised in the appended claims.

Further characteristics and advantages of the present invention will better emerge from the detailed description that follows of a preferred but non-exclusive embodiment of the invention, illustrated purely by way of a nonlimiting example in the accompanying figures of the drawings, in which:

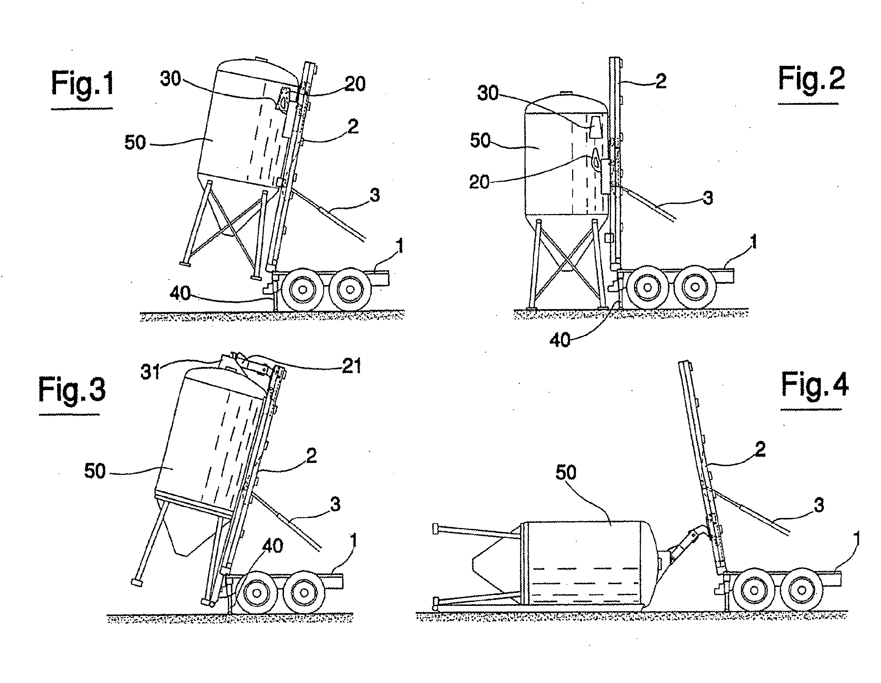

figures 1, 2, 3 and 4 schematically show stages of a movement of silos having various hookable structures;

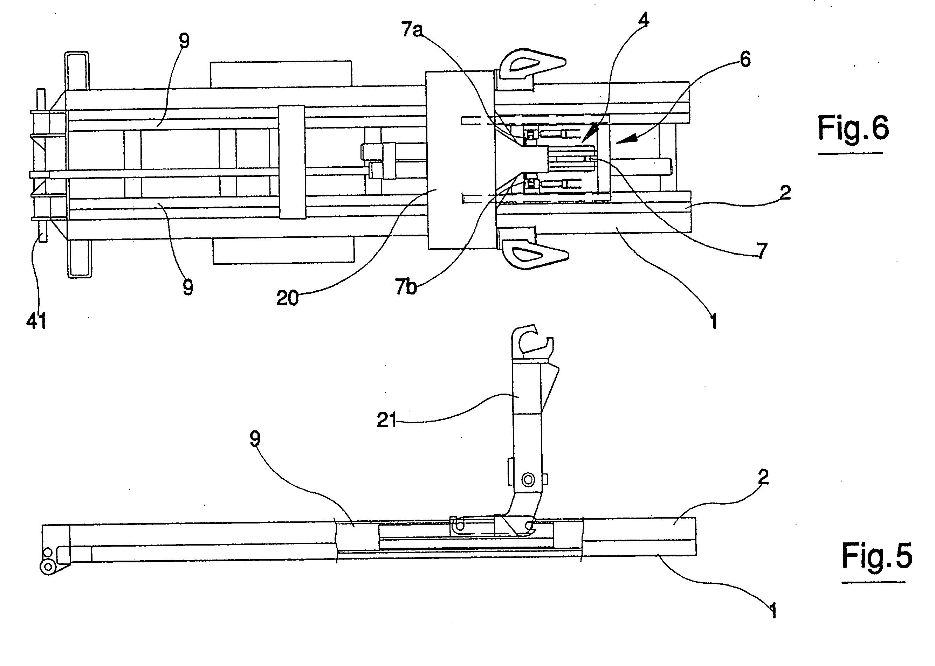

figure 5 is a side view of the fixed and mobile structures, in a horizontal position, with the mobile slide on which a type of hooking system is connected;
figure 6 is a view from above of the fixed and mobile structures, in a horizontal position, with the mobile slide on which a type of hooking system, different from the system of figure 5, is connected;

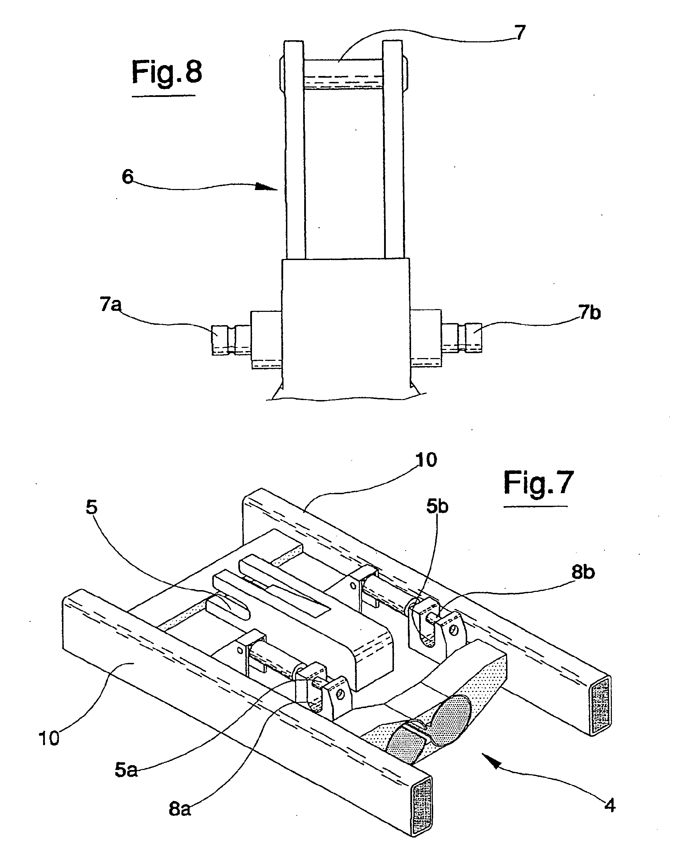

figure 7 is an enlarged-scale perspective view of the mobile slide;
figure 8 is an enlarged-scale perspective view of a frame on which the hooking systems are connected.

The device for trucks of the invention is destined to move and transport silos 50, in particular silos destined for building sites. These silos are provided with hookable structures of various types; the most common are represented by lateral pockets 30 or pins 31 which are located either above the silo or laterally thereto (this last solution is not illustrated. In order to grip and move the silos, various hooking systems exist, each of which is structured to engage on a special hookable structure provided on the silo. Among these are fork 20 systems, to hook up with the pockets 30, or hook systems having hooks 21 for hooking the pins 31. Other types of hookable structures can also be used, for hooking up with other types of hook-up systems.

The device of the invention comprises a horizontal structure 1 which is fixed to the frame of the truck to form a fixed rest plane; the horizontal structure 1 generally projects from the posterior part of the truck and bears support feet 40 which lower to the ground during the silo loading and unloading stages, stabilising the truck during these operations.

A mobile structure 2 is hinged to the back end of the fixed horizontal structure, on a hinge axis 41. The mobile structure 2, which defines a rest plane for the silo, is provided with a hydraulic cylinder 3 which can rotate the mobile structure 2 with respect to the fixed structure 1 about the hinge axis 41. The mobile structure 2 comprises a pair of hollow parallel guides 9.

The device further comprises a mobile slide 4 which can slide along the mobile structure 2; the mobile slide 4 is provided with two parallel tubular elements 10 which are fixed to sides of the slide and which can slide internally of the guides 9. The sliding of the slide along the guides is obtained using, for example, actuator means of known type.

Three fixture seatings are afforded in the mobile slide 4, i.e. a first fixture seating 5, semi-cylindrical and open in an external-facing direction, and a pair of second fixture seatings 5a and 5b, coaxial and semi-cylindrical, open in an external-facing direction in a perpendicular direction to the opening direction of the first fixture seating 5. In more detail, the opening of the first fixture seating 5 lies on a perpendicular plane to the sliding plane of the mobile slide 4 while the openings of the second fixture seatings 5a and 5b lie on a parallel plane to the sliding plane of the mobile slide 4. Obviously the opening planes of the seatings could be inverted with respect to what is described and illustrated.

A frame 6 is also provided, which includes connection elements that enable a stable and removable connection of the frame 6 to the mobile slide 4. In particular, the frame 6 comprises a cylindrical first pin 7 the dimensions of which are such as to enable insertion thereof into the first fixture seating 5; it further comprises a pair of cylindrical and coaxial second pins 7a and 7b the dimensions of which are such as to enable insertion thereof respectively into one each of the second fixture seatings 5a and 5b. In the illustrated embodiment the second pins are made on a single cylindrical bar.

Means for closure are provided on the frame for blocking each of the pins in respective seatings thereof. In the illustrated solution the means for closure comprise a pair of hydraulic jacks the bodies of which are solidly fixed on the frame in positions such that the stems 8a and 8b of the jacks when extended each insert on one of the seatings 5a and 5b, blocking the relative pin internally of each seating.

A rapid hooking-unhooking system is realised, with the above-described seatings and pivots, which means that rapid and easy connection and disconnection of the frame 6 to the mobile slide 4 is possible.

Any type of hooking system can easily be connected to the frame 6; for example, as illustrated, hooking systems 20 and 21 can be connected to the frame 6.

The frame 6 can comprise a fixture organ, of any type and in any case of known type, which enables solid and removable fixture of the chosen hooking system to the frame. In this case a single frame will be combined to the device to which a suitable hooking system will be connected according to the type of hookable structure provided on the silo to be moved.

The device can be provided with a plurality of frames 6 to each of which a particular hooking system can be solidly and unremovably fixed; in this case the choice of the suitable hooking system will be made by connecting the frame supporting the hooking system to the mobile slide 4. This is generally the preferred way of operating as the frame 6, which is neither a massive nor a heavy mechanical organ, is connectable to the frame very quickly; also, with this method it is not necessary to provide further means for removably fixture between the frame and hooking systems. Therefore it is preferable to use hooking systems to each of which a frame such as the one described is connected.

Once the type of hooking structure the silo bears has been determined, and once the suitable hooking system has been chosen and connected to the mobile slide 4 of the device, the rest feet 40 are rested on the ground to stabilise the truck and the silo is moved as with known-type systems.

The device can be solidly and unremovably connected to the frame of the truck. It may however be convenient to provide the device with mechanical fixture organs, such as, for example, bolted brackets, hooks with safety colures, secured pins or other organs of known type and not illustrated in the figures, which are able to guarantee solid and removable fixture of the fixed frame of the device to the frame of the truck. In this way the device, which is also provided with front rest elements (not illustrated) so as to be free-standing, can be unhooked from the frame of the truck, leaving the truck free to be used for other types of operations. The user can use the truck for various uses and connect the device for it when it is to be used for transport of silos.

During movement of the silos, in particular when not-completely-empty silos are to be loaded, there is the problem of checking whether the overall weight of the silo exceeds the load rating limit of the truck. For this purpose the device comprises a sensor, of known type, arranged on the hinge between the horizontal structure 1 and the mobile structure 2, which detects the stresses imposed on the hinge by the change in load present on the mobile structure. This reading, contrary to what happens in known-type systems that check stresses on trucks' suspension, is not influenced by the presence of the feet 40 and enables a reading to be taken as soon as the silo is detached from the ground and rests on the mobile structure of the truck. Thus the operator can immediately check whether the weight can be supported by the truck.

## Claims

1. A device for loading and transporting silos (50) on trucks, comprising a horizontal structure (1), fixed to a frame of a truck, to a posterior part of which truck a mobile structure (2) is hinged, which mobile structure (2) can be rotated with respect to the horizontal structure (1) by means of a hydraulic cylinder (3), which mobile structure (2) is provided with a hooking system (20, 21) which engages in hookable structures provided on the silos; a mobile slide (4), slidable along the mobile structure (2), on which mobile slide (4) at least one fixture seating (5, 5a, 5b) is afforded; a frame (6) to which the hooking system (20,21) is connected, provided with at least one connection element, which at least one connection element provides a stable and removable connection of the frame (6) to the mobile slide (4);
**characterised in that**: the mobile slide (4) comprises a first fixture seating (5) which is semi-cylindrical and open outwardly, and a pair of second fixture seatings (5a, 5b), which are coaxial and semi-cylindrical and which are open outwardly in a perpendicular direction to an opening of the first fixture seating (5); the frame (6) comprising a cylindrical first pin (7) which is insertable in the first fixture seating (5) and a pair of coaxial and cylindrical second pins (7a, 7b) which are respectively insertable in one each of the second seatings (5a, 5b); means for closure (8a, 8b) being provided for blocking at least some of the first and second pins in the seatings therefor.

2. The device of claim 1, **characterised in that** the means for closing comprise a pair of hydraulic jacks, stems of which (8a, 8b) each insert, during an extension stage thereof, on one of the second seatings (5a, 5b).

3. The device of claim 1, **characterised in that** the frame (6) comprises a fixture organ of known type, for enabling a solid and removable fixture of a hooking system to the frame.

4. The device of claim 1, **characterised in that** it comprises a plurality of the frames (6) which are interchangeable and to each of which a hooking system is solidly and unremovably fixed.

5. The device of claim 1, **characterised in that**: the mobile structure (2) comprises a pair of hollow parallel guides (9); the mobile slide (4) comprises two parallel tubular elements (10), fixed to sides of the truck and slidable internally of the pair of hollow parallel guides (9).

6. The device of claim 1, **characterised in that** it comprises a sensor of known type arranged on a hinge point located between the horizontal structure (1) and the mobile structure (2), for detecting stresses determined on the hinge point by variations in load present on the mobile slide (4).

7. The device of claim 1, **characterised in that** it comprises mechanical fixture organs, of known type, which enable a solid and removable fixture of the frame (1) of the device to a frame of the truck.

8. The device of claim 1, **characterised in that** it comprises a sensor of known type arranged on a hinge point located between the horizontal structure (1) and the mobile structure (2), which sensor detects stresses loaded onto the hinge point by variations of load present on the mobile slide (4).

## Patentansprüche

1. Vorrichtung zum Aufladen und Transportieren von Silos (50) auf Lastkraftwagen, enthaltend eine horizontale Struktur (1), die an einem Rahmen eines Lastkraftwagens befestigt ist, wobei an einen hinteren Teil des Lastkraftwagens eine bewegliche Struktur (2) angelenkt ist, welche bewegliche Struktur (2) im Verhältnis zu der horizontalen Struktur (1) mit Hilfe eines Hydraulikzylinders (3) gedreht werden kann, welche bewegliche Struktur (2) mit einem Einhaksystem (20, 21) versehen ist, das in einhakbare Strukturen greift, die an den Silos vorgesehen sind; einen beweglichen Schlitten (4), gleitbar entlang der beweglichen Struktur (2), an welchem beweglichen Schlitten (4) wenigstens ein Befestigungssitz (5, 5a, 5b) aufgewiesen ist; einen Rahmen (6), an welchen das Einhaksystem (20, 21) angeschlossen ist, versehen mit wenigstens einem Verbindungselement, welches wenigstens eine Verbindungselement einen stabilen und lösbaren Anschluss des Rahmens (6) an den beweglichen Schlitten (4) vorsieht; **dadurch gekennzeichnet, dass** der bewegliche Schlitten (4) einen ersten Befestigungssitz (5) enthält, welcher halbzylindrisch und nach aussen hin offen ist, und ein Paar von zweiten Befestigungssitzen (5a, 5b), welche koaxial und halbzylindrisch sind, und welche nach aussen hin offen sind, und zwar in einer lotrechten Richtung zu einer Öffnung des ersten Befestigungssitzes (5); wobei der Rahmen (6) einen zylindrischen ersten Zapfen (7) enthält, welcher in den ersten Befestigungssitz (5) einsetzbar ist, und ein Paar von koaxialen und zylindrischen zweiten Zapfen (7a, 7b), welche jeweils in einen jeden der zweiten Befestigungssitze (5a, 5b) einsetzbar sind; wobei Mittel zum Verschliessen (8a, 8b) vorgesehen sind, um wenigstens einige der ersten und zweiten Zapfen in ihren Sitzen zu blockieren.

2. Vorrichtung nach Patentanspruch 1, **dadurch gekennzeichnet, dass** die Mittel zum Verschliessen ein Paar von hydraulischen Winden enthalten, deren Schäfte (8a, 8b) sich während der Ausfahrphase derselben über einem der zweiten Sitze (5a, 5b) einschieben.

3. Vorrichtung nach Patentanspruch 1, **dadurch gekennzeichnet, dass** der Rahmen (6) ein Befestigungselement von bekanntem Typ enthält, um eine stabile und lösbare Befestigung eines Einhaksystems an dem Rahmen zu ermöglichen.

4. Vorrichtung nach Patentanspruch 1, **dadurch gekennzeichnet, dass** sie eine Anzahl der Rahmen (6) enthält, welche austauschbar sind und an welchen jeweils ein Einhaksystem stabil und nicht lösbar befestigt ist.

5. Vorrichtung nach Patentanspruch 1, **dadurch gekennzeichnet, dass**: die bewegliche Struktur (2) ein Paar von hohlen parallelen Führungen (9) enthält; und der bewegliche Schlitten (4) zwei parallele rohrförmige Elemente (10) enthält, befestigt an den Seiten des Lastkraftwagens und verschiebbar im Inneren des Paares von hohlen parallelen Führungen (9).

6. Vorrichtung nach Patentanspruch 1, **dadurch gekennzeichnet, dass** sie einen Fühler von bekanntem Typ enthält, angeordnet an einem Gelenkpunkt, der sich zwischen der horizontalen Struktur (1) und der beweglichen Struktur (2) befindet, um die Belastungen zu erfassen, die durch Veränderungen der auf dem beweglichen Schlitten (4) vorhandenen Ladungen auf den Gelenkpunkt ausgeübt werden.

7. Vorrichtung nach Patentanspruch 1, **dadurch gekennzeichnet, dass** sie mechanische Befestigungselemente von bekanntem Typ enthält, welche eine stabile und lösbare Befestigung des Rahmens (1) der Vorrichtung an einem Rahmen des Lastkraftwagens ermöglichen.

8. Vorrichtung nach Patentanspruch 1, **dadurch gekennzeichnet, dass** sie einen Fühler von bekanntem Typ enthält, angeordnet an einem Gelenkpunkt, der sich zwischen der horizontalen Struktur (1) und der beweglichen Struktur (2) befindet, welcher Fühler die Belastungen erfasst, die durch Veränderungen der auf dem beweglichen Schlitten (4) vorhandenen Ladungen auf den Gelenkpunkt ausgeübt werden.

## Revendications

1. Dispositif pour le chargement et le transport des silos sur des camions, comprenant une structure horizontale (1), fixée sur le châssis d'un camion, sur la partie postérieure duquel camion est articulée une structure mobile (2), laquelle structure mobile (2) peut être pivotée par rapport à la structure horizontale (1) au moyen d'un vérin hydraulique (3), laquelle structure mobile (2) est pourvue d'un système d'accrochage (20, 21) qui s'engage dans des structures accrochables prévues sur les silos; un chariot mobile (4), coulissant le long de la structure mobile (2), sur lequel chariot mobile (4) est prévu au moins un logement de fixation (5, 5a, 5b); un châssis (6) sur lequel le système d'accrochage (20, 21) est connecté, pourvu d'au moins un élément de connexion, lequel permet d'obtenir une connexion stable et amovible entre le châssis (6) et le chariot mobile (4);
**caractérisé en ce que**: le chariot mobile (4) comprend un premier logement de fixation (5) semi-cylindrique et ouvert vers l'extérieur, et une paire de seconds logements de fixation (5a, 5b), qui sont coaxiaux et semi-cylindriques et qui sont ouverts vers l'extérieur dans une direction perpendiculaire à une ouverture du premier logement de fixation (5); le châssis (6) comprenant un premier axe cylindrique (7) pouvant être inséré dans le premier logement de fixation (5) et une paire de seconds axes (7a, 7b) coaxiaux et cylindriques qui sont respectivement insérables dans l'un des seconds logements (5a, 5b); des moyens de fermeture (8a, 8b) étant prévus pour bloquer au moins certains desdits premiers et seconds axes dans les respectifs logements.

2. Dispositif selon la revendication 1, **caractérisé en ce que** les moyens de fermeture comprennent une paire de vérins hydrauliques, dont les tiges (8a, 8b) s'insèrent chacune, pendant leur phase d'extension, dans l'un des seconds logements (5a, 5b).

3. Dispositif selon la revendication 1, **caractérisé en ce que** le châssis (6) comprend un organe de fixation de type connu, pour permettre une fixation solide et amovible d'un système d'accrochage au châssis.

4. Dispositif selon la revendication 1, **caractérisé en ce qu'**il comprend une pluralité de châssis (6) qui sont interchangeables et à chacun desquels est fixé de manière solidaire et inamovible un système d'accrochage.

5. Dispositif selon la revendication 1, **caractérisé en ce que**: la structure mobile (2) comprend une paire de guides parallèles creux (9); le chariot mobile (4) comprend deux éléments tubulaires parallèles (10), fixés sur les côtés du camion et coulissants à l'intérieur de la paire de guides parallèles creux (9).

6. Dispositif selon la revendication 1, **caractérisé en ce qu'**il comprend un capteur de type connu disposé sur un point d'articulation situé entre la structure horizontale (1) et la structure mobile (2), pour détecter des contraintes exercées sur le point d'articulation par des variations de charge présentes sur le chariot mobile (4).

7. Dispositif selon la revendication 1, **caractérisé en ce qu'**il comprend des organes de fixation mécaniques, de type connu, permettant une fixation solide et amovible du châssis (1) du dispositif à un châssis du camion.

8. Dispositif selon la revendication 1, **caractérisé en ce qu'**il comprend un capteur de type connu disposé sur un point d'articulation situé entre la structure horizontale (1) et la structure mobile (2), lequel capteur détecte les contraintes exercées sur le point d'articulation par des variations de charge présentes sur le chariot mobile (4).
